# EUROPEAN PATENT APPLICATION

(11) **EP 0 159 381 A1**
(43) Date of publication of application: **30.10.1985**
(21) Application number: 84104639.4
(22) Date of filing: 25.04.1984
(51) Int. Cl.: A01N 47/12

(54) **Herbicidal system**

(71) Applicant: SUMITOMO CHEMICAL COMPANY, LIMITED, Chuo-ku Osaka 541 (JP)
(72) Inventor: Hashimoto, Shunichi, Leland Mississippi 38756 (US); Yoshida, Ryo, Kawanishi Hyogo (JP)
(74) Representative: VOSSIUS & PARTNER

(57) **Abstract**

A herbicidal system for efficiently controlling or exterminating weeds in the field of corn without causing any material phytotoxicity which comprises the associated use of (a) N-(4-chloro-2-fluoro-5-isopropoxyphenyl)-3,4,5,6-tetrahydrophthalimide, (b) at least one of S-ethyl-N,N-diisobutylthiolcarbamate and S-ethyl-N,N-di-n-propylthiol- carbamate and (c) N,N-diallyl-2,2-dichloroacetamide, the weight proportion of the component (a) and the components (b) and (c) being 1:0.2-60.

## Description

The present invention relates to a herbicidal system. More particularly, it relates to a herbicidal system comprising (a) N-(4-chloro-2-fluoro-5-isopropoxyphenyl)-3,4,5,6-tetrahydrophthalimide (hereinafter referred to as "Compound (I)") of the formula: 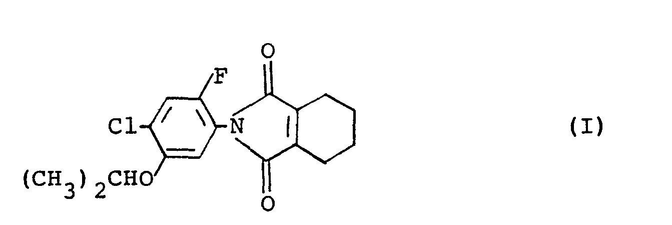 (b) at least one of S-ethyl-N,N-diisobutylthiolcarbamate (hereinafter referred to as "butylate") and S-ethyl-N,N-di-n-propylthiolcarbamate (hereinafter referred to as "EPTC") and (c) N,N-diallyl-2,2-dichloroacetamide (hereinafter referred to as "R-25788"), which exerts a highly enhanced herbicidal activity against a wide variety of weeds without causing any material phytotoxicity to crop plants, particularly corn (maize).

In recent years, there are used a great number of chemicals having herbicidal activities in order to exterminate or control the undesired vegetation of weeds. However, the kinds of weeds are very broad and, in consequence, the germination thereof as well as the stages of growth differ from each other. The herbicidal effects of conventional herbicidal agents are thus quite restricted in general. In view of such situation, the appearance of any herbicidal agent which exerts a strong herbicidal activity against a wide variety of weeds without any material phytotoxicity to crop plants has been highly demanded.

As a result of the extensive study, it has now been found that the associated use of (a) Compound (I) with (b) at least one of butylate and EPTC and (c) R-25788 produces a highly enhanced herbicidal activity against a wide variety of weeds including narrow-leaved weeds and broad-leaved weeds in the field of principal crop plants without causing any material phytotoxicity to those crop plants, particularly corn. In comparison with the sole use of each of said active ingredients, enhancement of the herbicidal activity on such associated use is very remarkable. Thus, a clear and definite synergistic effect is observed in said associated use.

In addition, it may be noted that the phytotoxicity in corn as observed on the sole application of Compound (I) in a large quantity for the purpose of extermination of perennial weeds is much alleviated when Compound (I) is applied with butylate and/or EPTC and R-25788.

Compound (I) is known to exert a herbicidal activity with high selectivity to corn (EP-A-0061741). Butylate and EPTC are also known to be useful as selective herbicides ("The Pesticide Manual" edited by C.R. Worthing and published by The British Crop Protection Council, 6th Ed., pages 71 and 237 (1979)). Further, R-25788 is known as a detoxicant ("The Pesticide Mannual" as referred to above, page 162 (1979)). However, the associated use of Compound (I) with butylate and/or EPTC and R-25788 has never been attempted, and the production of said synergistic effect on such associated use has never been expected.

For efficient production of the synergistic effect, the associated use of Compound (I) as the component (a) and the combination of at least one of butylate and EPTC as the component (b) and R-25788 as the component (c) is preferred to be in a weight proportion of about 1 : 0.2 - 60, particularly of about 1 : 0.5 - 20. The mixing ratio of at least one of butylate and EPTC to R-25788 is normally from about 5 to 20, preferably about 12, in weight.

The term "associated use" as herein employed is intended to mean the application of Compound (I) as the component (a), at least one of butylate and EPTC as the component (b) and R-25788 as the component (c) in any appropriate manner, e.g. in combination or separately, simultaneously or stepwise, etc.

Said essential active ingredients, i.e. the components (a), (b) and (c) may be applied as such but are usually applied in conventional preparation forms. They may be thus formulated, for instance, in a single composition comprising the components (a), (b) and (c) for the combined application or two compositions, of which one comprises the component (a) and the other comprises the components (b) and (c), for the separate application. In any event, each of said compositions may contain from about 1 to 95 % by weight, preferably from about 5 to 80 % by weight, of the active ingredient(s).

In addition to the above active ingredients, the composition may contain a solid or liquid carrier or diluent. Any surface active or auxiliary agent may be also contained therein. Thus, the composition may be formulated in any conventional formulation form such as emulsifiable concentrate, wettable powder, suspension or granules. As the solid carrier or diluent, there may be used kaolin clay, attapulgite clay, bentonite, terra alba, pyrophyllite, talc, diatomaceous earth, calcite, wallnut-shell powder, urea, ammonium sulfate, synthetic hydrated silicon dioxide, etc. Examples of the liquid carrier or diluent are aromatic hydrocarbons (e.g. xylene, methylnaphthalene), alcohols (e.g. isopropanol, methylene glycol, cellosolve), ketones (e.g. acetone, cyclohexanone, isophorone), vegetable oils (e.g. soybean oil, cotton-seed oil), dimethylsulfoxide, acetonitrile, water, etc.

The surface active agent used for emulsification, dispersion or spreading may be any of the anionic and nonionic type of agents. Examples of the surface active agent include alkylsulfates, alkylarylsulfonates, dialkylsulfosuccinates, phosphates of polyoxyethylenealkylaryl ethers, polyoxyethylene alkyl ethers, polyoxyethylene alkylaryl ethers, polyoxyethylene polyoxypropylene block copolymers, sorbitan fatty acid esters, polyoxyethylene sorbitan fatty acid esters, etc. Examples of the auxiliary agents include ligninsulfonates, sodium alginate, polyvinyl alcohol, gum arabic, CMC (carboxymethyl cellulose), PAP (isopropyl acid phosphate), etc.

Practical embodiments of the composition are illustratively shown in the following Formulation Examples wherein part(s) are by weight.

### Formulation Example 1

One part of Compound (I), 9 parts of a mixture of R-25788 and butylate (1 : 12), 14 parts of polyoxyethylene styrylphenyl ether, 6 parts of calcium dodecylbenzenesulfonate and 70 parts of xylene are well mixed while being powdered to obtain an emulsifiable concentrate.

### Formulation Example 2

(A) Fifty parts of Compound (I), 3 parts of calcium ligninsulfonate, 2 parts of sodium laurylsulfate and 45 parts of synthetic hydrated silicon dioxide are well mixed while being powdered to obtain a wettable powder.
(B) Ten parts of a mixture of R-25788 and butylate (1 : 12), 14 parts of polyoxyethylene styrylphenyl ether, 6 parts of calcium dodecylbenzenesulfonate and 70 parts of xylene are well mixed while being powdered to obtain an emulsifiable concentrate.

### Formulation Example 3

(A) Two parts of Compound (I), 1 part of synthetic hydrated silicon dioxide, 2 parts of calcium ligninsulfonate, 30 parts of bentonite and 65 parts of kaolin clay are well mixed while being pulverized. The resulting powder is admixed with water and dried to obtain granules.
(B) Ten parts of a mixture of R-25788 and EPTC (1 : 12), 14 parts of polyoxyethylene styrylphenyl ether, 6 parts of calcium dodecylbenzenesulfonate and 70 parts of xylene are well mixed while being powdered to obtain an emulsifiable concentrate.

In order to improve the herbicidal activity, the composition may be used with other herbicides. Besides, it may be used in combination with insecticides, acaricides, nematocides, fungicides, plant growth regulators, fertilizers, soil improvers, etc.

The dosage of the active ingredients may vary depending on prevailing weather conditions, soil involved, formulation used, mixing proportion of each active ingredient, crop and weed species, etc. In general, however, the total amount of the components (a), (b) and (c) is favored to be within a range of 12 to 80 grams per are, preferably 20 to 60 grams per are.

The composition may be applied as such or in any diluted form, particularly with water, to the area where weeds are grow or will grow, particularly to the field of corn, by any per se conventional procedure such as foliar treatment or soil treatment, mixing treatment or surface treatment, etc. Usually, soil treatment is favorable. In case of the composition being formulated into an emulsifiable concentrate, wettable powder or suspension, it is normally diluted with water and applied over the top at a volume of 1 to 10 liters per are to the foliage of the crop plants or weeds which germinate or have germinated. The dilution may include, in addition to the above mentioned surface active agent, any spreading or auxiliary agent such as polyoxyethylene resin acid esters, ligninsulfonates, abietic acid, dinaphthylmethanedisulfonates, paraffin and the like. The composition being formulated into granules is generally applied as such. While a sufficient herbicidal activity can be expected by single soil treatment, a more prominent herbicidal activity may be produced when the application is made stepwise. Particularly recommendable are to apply first the composition comprising the components (b) and (c), especially in a weight proportion of 12 : 1, by soil mixing treatment (i.e. the components (b) and (c) being mixed into soil) and, after planting crop plants, to apply the component (a) by soil surface treatment (i.e. the component (a) being applied to the surface of soil), whereby the broad-leaved weeds as well as the narrow-leaved weeds are satisfactorily exterminated at their small doses without causing any material phytotoxicity to principal plants, particularly corn.

The herbicidal system of the invention can exterminate or control a variety of weeds such as broad-leaved weeds and the narrow-leaved weeds, of which typical examples are as follows: common lambsquarters (Chenopodium album), redroot pigweed (Amaranthus retroflexus), smartweed (Polygonum sp.), common chickweed (Stellaria media), common purslane (Portulaca oleracea), cocklebur (Xanthium strumarium), jimsonweed (Datura stramonium), velvetleaf (Abutilon theophrasti), tall morningglory (Ipomoea purpurea), hemp sesbania (Sesbania exaltata), prickly sida (Sida spinosa), black nightshade (Solanum nigrum), field bindweed (Convolvulus arrensis), common milkweed (Asclepias syriaca), green foxtail (Setaria viridis), large crabgrass (Digitaria sanguinalis), annual bluegrass (Poa annua), bermudagrass (Cynodon dactylon), goosegrass (Eleusine indica), barnyardgrass (Echinochloa crus-galli), johnsongrass (Sorghum halepense), purple nutsedge (Cyperus rotundus), yellow nutsedge (Cyperus esculentus), etc.

The practical herbicidal activity of the system of the invention will be explained in further detail with reference to the following Test Examples wherein the growth controlling percentage (%) was determined by weighing the aerial parts of the test plants (fresh weight) and making calculation according to the following equation:

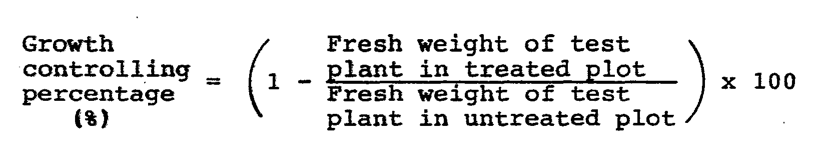

### Test Example 1

The seeds of tall morningglory were sowed in a cylindrical pot (diameter, 10 cm; length, 10 cm) filled with field soil and covered therewith. A designed amount of the composition in the form of an emulsifiable concentrate formulated as in Formulation Example 1 was diluted with water and sprayed to the soil surface at a spray volume of 10 liters per are by the aid of a small hand sprayer, followed by mixing up of the soil to the depth of 3 cm. After 20 days' cultivation in a greenhouse, the growth controlling percentage was observed. The results are shown in Table 1.

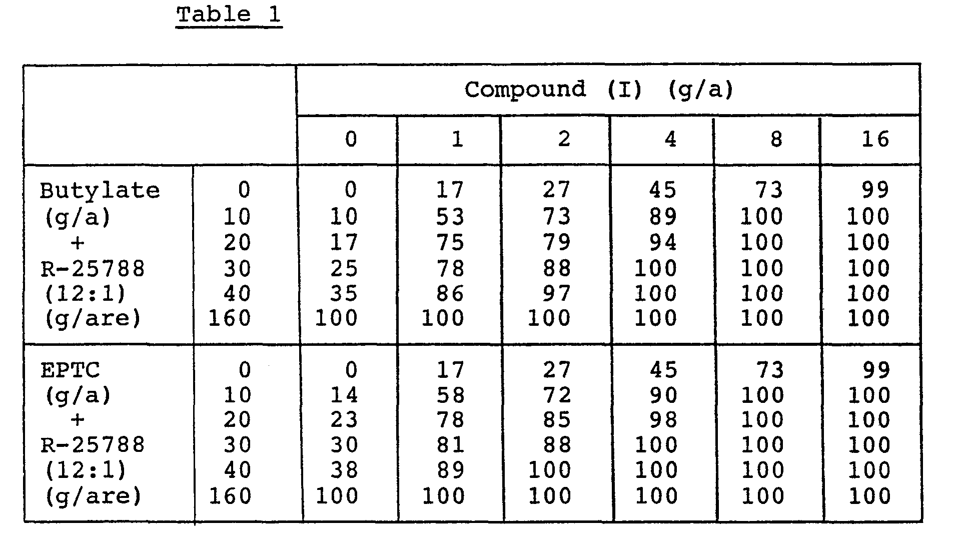

### Test Example 2

The field soil was filled in a cylindrical pot (diameter, 10 cm; length, 10 cm) and a designed amount of the composition in the form of an emulsifiable concentrate formulated as in Formulation Example 1 and diluted with water was sprayed to the soil surface at a spray volume of 10 liters per are by the aid of a small hand sprayer. Upon mixing the soil to the depth of 3 cm, the seeds of corn were planted to the depth of 1.5 cm and cultivated. After 20 days' cultivation in outdoors, the phytotoxicity to corn was observed by grading the growing status of corn into five, i.e. 0 (no injury) to 5 (complete death). The results are shown in Table 2.

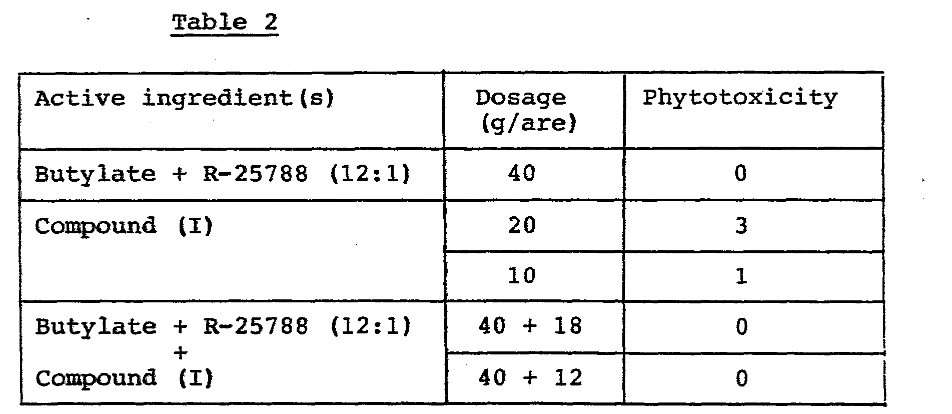

### Test Example 3

The field soil was filled in a vat (33 x 23 x 11 cm) and a designed amount of the composition in the form of an emulsifiable concentrate formulated as in Formulation Example 1 and diluted with water was sprayed to the soil surface at a spray volume of 10 liters per are by the aid of a small hand sprayer. Upon mixing the soil to the depth of 4 cm, the seeds of large crabgrass, green foxtail, johnsongrass, velvetleaf and corn were planted to the depth of 1 to 2 cm. After 20 days' cultivation in outdoors, the growth controlling percentage of the weeds as well as the phytotoxicity to corn were observed in the same manner as in Test Example 1. The evaluation of the phytotoxicity to corn was made visually. The results are shown in Table 3.

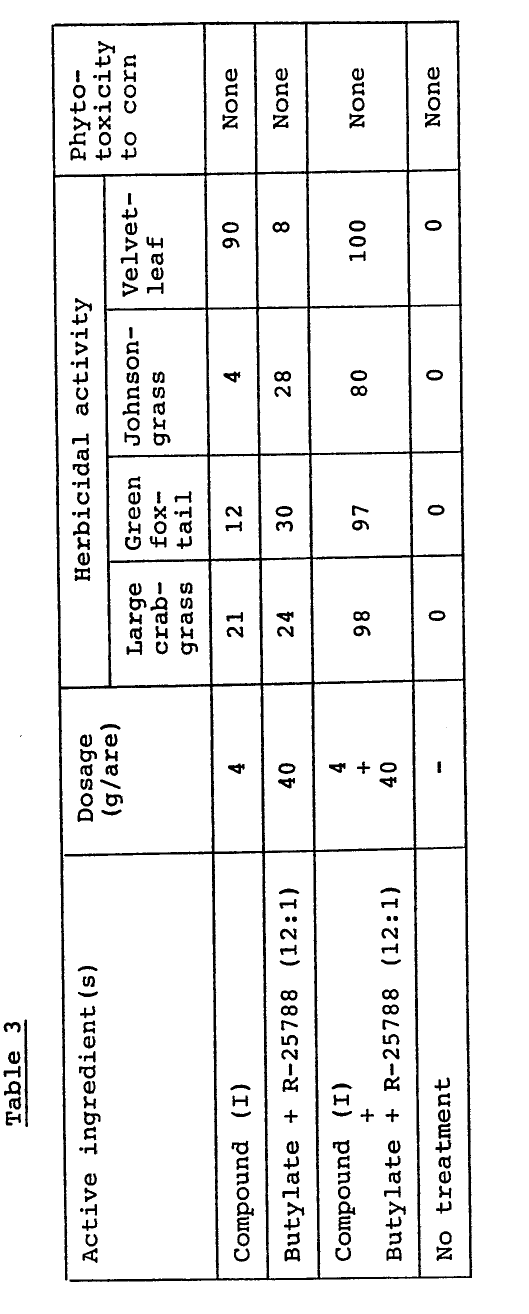

### Test Example 4

The seeds of tall morningglory were sowed in a cylindrical pot (diameter, 10 cm; length, 10 cm) filled with field soil and covered therewith. A designed amount of the composition in the form of an emulsifiable concentrate formulated as in Formulation Example 2 (B) or 3 (B) but using a mixture of butylate or EPTC and R-25788 in a weight proportion of 12 : 1 was diluted with water and sprayed to the soil surface at a spray volume of 10 liters per are by the aid of a small hand sprayer, followed by mixing up of the soil to the depth of 3 cm. Thereafter, a designed amount of the composition in the form of an emulsifiable concentrate formulated as in Formulation Example 2 (B) but using Compound (I) in place of a mixture of R-25788 and butylate and diluted with water was sprayed to the soil surface at a spray voluem of 10 liters per are. After 20 days' cultivation in a greenhouse, the growth controlling percentage was observed in the same manner as in Test Example 1. The results are shown in Table 4.

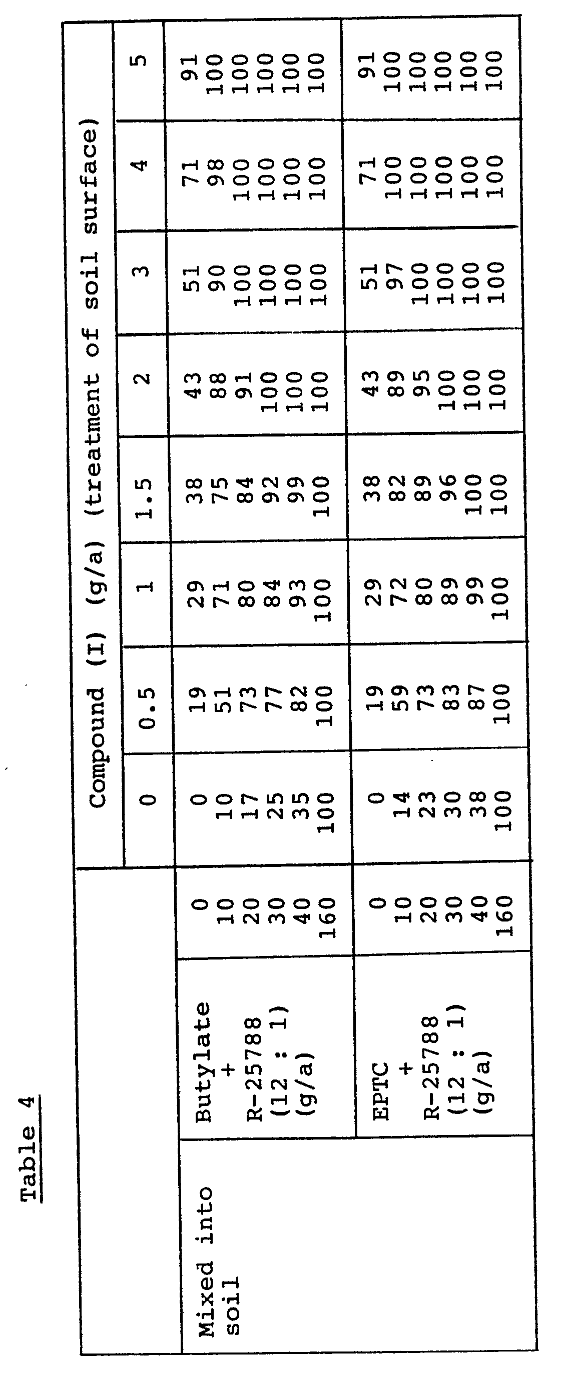

### Test Example 5

In a cylindrical pot (diameter, 10 cm; length, 10 cm) filled with field soil, a designed amount of the composition in the form of an emulsifiable concentrate formulated as in Formulation Example 2 (B) and diluted with water was sprayed to the soil surface at a spray volume of 10 liters per are by the aid of a small hand sprayer, followed by mixing up of the soil to the depth of 3 cm. Thereafter, the seeds of corn was planted to the depth of 1.5 cm and a designed amount of the composition in the form of an emulsifiable concentrate formulated as in Formulation Example 2 (B) but using Compound (I) in place of a mixture of R-25788 and butylate and diluted with water was sprayed to the soil surface at a spray volume of 10 liters per are. After 20 days' cultivation in outdoors, the phytotoxicity to corn was observed in the same manner as in Test Example 2. The results are shown in Table 5.

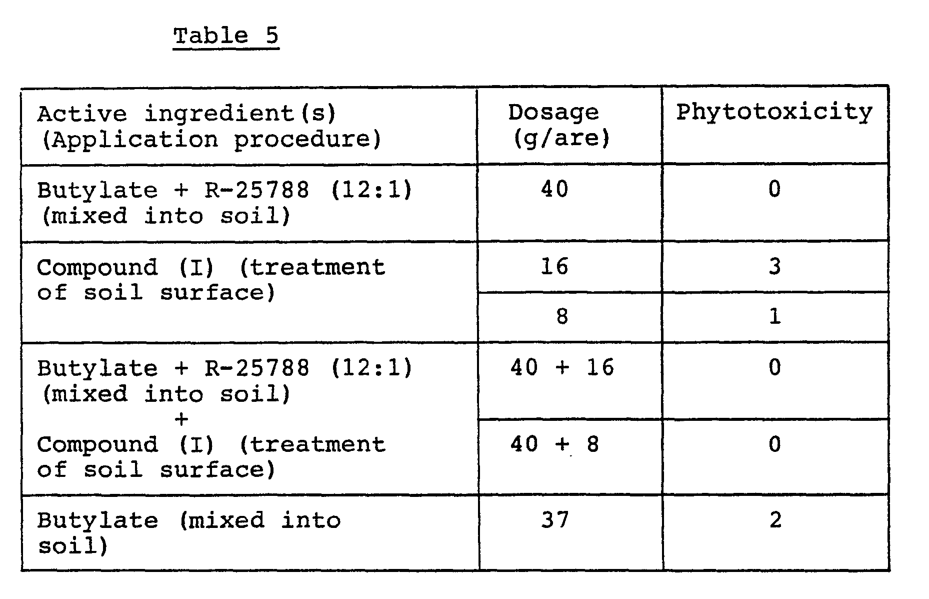

### Test Example 6

The field soil was filled in a vat (33 x 23 x 11 cm) and a designed amount of the composition in the form of an emulsifiable concentrate formulated as in Formulation Example 2 (B) and diluted with water was sprayed to the soil surface at a spray volume of 10 liters per are by the aid of a small hand sprayer. Upon mixing the soil to the depth of 4 cm, the seeds of large crabgrass, green foxtail, johnsongrass, velvetleaf and corn were planted to the depth of 1 to 2 cm. A designed amount of the composition in the form of an emulsifiable concentrate formulated as in Formulation Example 2 (B) but using Compound (I) in place of a mixture of R-25788 and butylate and diluted with water was sprayed to the soil surface at a spray volume of 10 liters per are by the aid of a small hand sprayer. After 20 days' cultivation in outdoors, the growth controlling percentage of the weeds as well as the phytotoxicity to corn were observed in the same manner as in Test Example 3. The results are shown in Table 6.

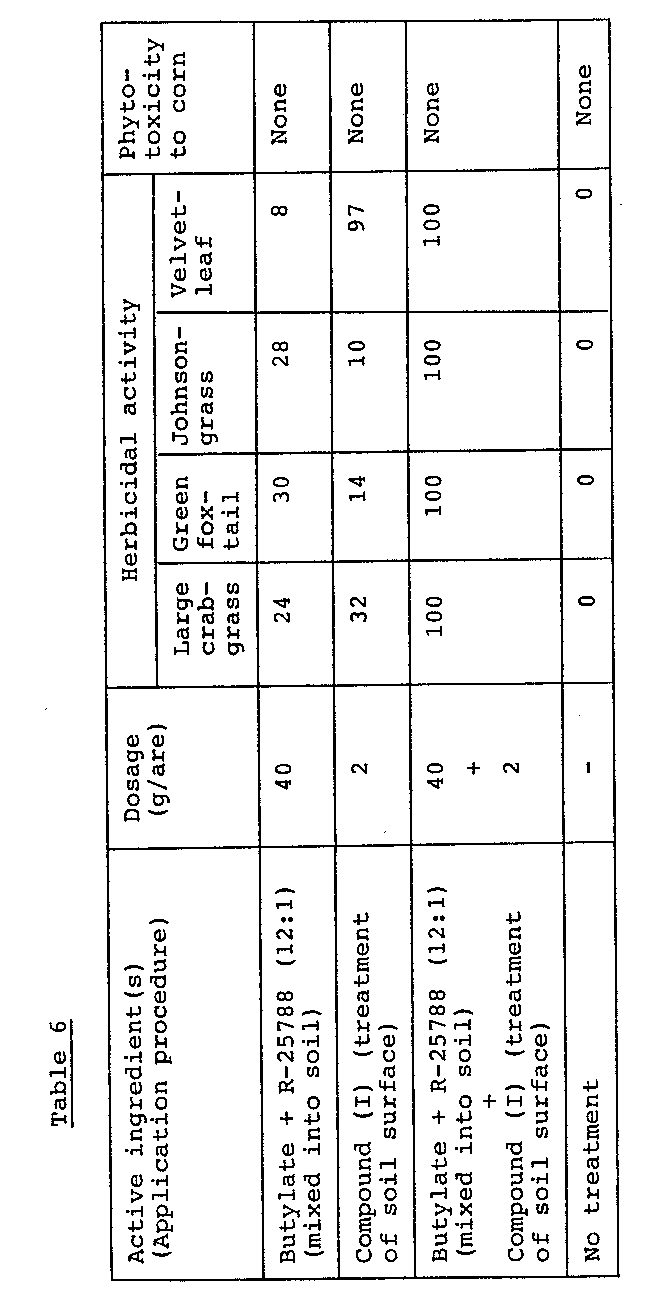

## Claims

1. A herbicidal system which comprises the associated use of (a) N-(4-chloro-2-fluoro-5-isopropoxyphenyl)-3,4,5,6-tetrahydrophthalimide, (b) at least one of S-ethyl-N,N-diisobutylthiolcarbamate and S-ethyl-N,N-di-n-propylthiolcarbamate and (c) N,N-diallyl-2,2-dichloro- acetamide.

2. The herbicidal system according to claim 1, wherein the weight proportion of the component (a) and the components (b) and (c) is 1 : 0.2 - 60.

3. The herbicidal system according to claim 1, wherein the weight proportion of the components (b) and (c) is 5 - 20 : 1.

4. The herbicidal system according to claim 1, wherein the components (a), (b) and (c) are formulated in a composition comprising them in combination.

5. The herbicidal system according to claim 4, wherein the composition contains the components (a), (b) and (c) in an amount of from 1 to 95 % by weight.

6. The herbicidal system according to claim 1, wherein the components (a), (b) and (c) are formulated separately in two compositions of which one comprises the component (a) and the other comprises the components (b) and (c).

7. The herbicidal system according to claim 6, wherein each of the compositions contains the component (a) or the components (b) and (c) in an amount of from 1 to 95 % by weight.

8. The herbicidal system according to claim 1, which comprises a single composition comprising the component (a) and the components (b) and (c) in a weight proportion of 1 : 0.2 - 60.

9. The herbicidal system according to claim 8, wherein the component (c) is contained in an amount of 1 part by weight to 12 parts by weight to the component (b).

10. The herbicidal system according to claim 8, wherein the composition contains the components (a), (b) and (c) in an amount of 1 to 95 % by weight.

11. The herbicidal system according to claim 1, which comprises a composition comprising the component (a) and a composition comprising the components (b) and (c), the weight proportion of the component (a) and the components (b) and (c) being 1 : 0.2 - 60.

12. The herbicidal system according to claim 11, wherein the composition comprising the component (c) is contained in an amount of 1 part by weight to 12 parts by weight to the component (b).

13. The herbicidal system according to claim 11, wherein each of the compositions contains the component (a) or the components (b) and (c) in an amount of from 1 to 95 % by weight.

14. A herbicidal composition comprising the components (a), (b) and (c), and an inert carrier or diluent, which is used in the herbicidal system according to claim 1.

15. A herbicidal composition comprising the component (a), and an inert carrier or diluent, which is used in the herbicidal system according to claim 1.

16. A herbicidal composition comprising the components (b) and (c), and an inert carrier or diluent, which is used in the herbicidal system according to claim 1.

17. A method for controlling or exterminating weeds which comprises applying herbicidally effective amounts of (a) N-(4-chloro-2-fluoro-5-isopropoxyphenyl)-3,4,5,6-tetrahydrophthalimide, (b) at least one of S-ethyl-N,N-diisobutylthiolcarbamate and S-ethyl-N,N-di-n-propylthiolcarbamate and (c) N,N-diallyl-2,2-dichloro- acetamide in association to the area where the weeds grow or will grow.

18. The method according to claim 17, wherein the weight proportion of the component (a) and the components (b) and (c) is 1 : 0.2 - 60.

19. The method according to claim 17, wherein the components (a), (b) and (c) are applied simultaneously in combination.

20. The method according to claim 17, wherein the component (a) and the components (b) and (c) are applied separately and stepwise in an optional order.

21. The method according to claim 17, wherein the components (b) and (c) are first applied and then the component (a) is applied.

22. The method according to claim 21, wherein crop plants are planted between the application of the components (b) and (c) and the application of the component (a).

23. The method according to claim 17, wherein the area is the field of corn.
